# EUROPEAN PATENT SPECIFICATION

(11) **EP 3 878 568 B1**
(45) Date of publication and mention of the grant of the patent: **18.12.2024**
(21) Application number: 20162758.5
(22) Date of filing: 12.03.2020
(51) Int. Cl.: B09C 1/00, B09C 1/02, B09C 1/06, B09C 1/08, B09C 1/10

(54) **A DECONTAMINATION SET, A DECONTAMINATION ARRANGEMENT AND A METHOD FOR DECONTAMINATING SOIL**
DEKONTAMINATIONSSATZ, DEKONTAMINATIONSANORDNUNG UND VERFAHREN ZUR DEKONTAMINATION VON BÖDEN
SET DE DÉCONTAMINATION, DISPOSITIF DE DÉCONTAMINATION ET PROCÉDÉ DE DÉCONTAMINATION DE SOLS

(43) Date of publication of application: 15.09.2021
(73) Proprietor: Globe Water AB, 181 38 Lidingö (SE)
(72) Inventor: SCHWALBE, Pontus, 181 38 Lidingö (SE)
(74) Representative: Bjerkén Hynell KB

(56) References cited:
- JP-A- 2009 226 229
- JP-A- H04 193 388
- SE-C2- 507 929

## Description

### TECHNICAL FIELD

The present disclosure relates to devices and methods for removing of contaminants from the ground.

### BACKGROUND OF THE INVENTION AND PRIOR ART

Worldwide there are large areas with contaminated soil, which soil has been contaminated by harmful substances, such as heavy metals, PCB, chlorinated hydrocarbons, oil, chemicals etc. The contaminated soil prohibits buildings on that ground due to health risks for people that would work and live in the area. The contaminated soil causes also environmental problems which can lead to poisoning of the ground water.

Several methods for cleaning contaminated soil have been developed. Conventionally the contaminated soil is removed and transported to a decontamination facility, in which the soil is cleaned and thereafter restored to the ground area, where the removal took place. Such a method and the decontamination facility become very complicated and thereby expensive to accomplish. The decontamination facility can be a mobile facility to be usable in the areas to be cleaned, or the soil has to be transported to a stationary facility far from the ground area, which requires many heavy transports causing further emissions to the atmosphere. Also chemical methods have been developed to clean contaminated soil, microemulsions then are pressed into the ground to wash the decontaminations away from it. Even this method becomes complicated due to the aggregates pressing down the microemulsions and pumping these again out of the contaminated ground.

Efforts have been made to develop alternative technologies for decontaminating of contaminated soil.

SE507929C2 describes a method and a device for decontaminating soil. According to the document one or several horizontally drilled holes are provided in which a respective chord comprising interlinked sockets with reactive sorbents is inserted. Then, the chord remains under the ground during a sufficiently long period for a desired decontamination of the soil. JP2009226229A describes a method of cleaning an oil contaminated region using a bag with an oil absorbing material and with a perforated pipe extending through the bag for collecting the oil.

JPH04193388A describes an oil absorbent consisting of dry pet and cotton-like fiber.

Although the method and the device described in the SE507929C2 work well, the handling of the chord at the holes entails some difficulties. Thus, the main object of the present invention is to provide a decontamination set and a method for decontaminating soil that simplifies the process of decontamination of the soil.

### SUMMARY OF THE INVENTION

An object of the present disclosure is to provide an improved decontamination unit that simplifies the process of decontamination of contaminated soil.

The object is achieved by a decontamination unit for decontaminating soil of an area of the ground from harmful substances. With an area is meant a volume of the ground, i.e. the area of the ground has a surface with a surface area and a depth from the surface. The decontamination unit comprises: a body comprising an outer coating of a fluid permeable material and an absorbent material, for absorbing of the harmful substances, enclosed within the outer coating. Thus, the absorbing material is held within the outer coating of the body. The body comprises also a hose having an intermediate perforated part arranged in the absorbent material inside the body, and a first end part and a second end part protruding from a respective first end and second end of the body, wherein the first end part and the second end part are connectable to another decontamination unit or to a fluid handling device to permit fluid communication to and from the hose.

Because the first end part and the second end part of the hose are connectable to another decontamination unit or to a fluid handling device to permit fluid communication to and from the hose, the hose can be connected to another hose of the another decontamination unit or can be connected to the fluid handling device such that the fluid can be supplied to the hose through the another hose or can be supplied directly from the fluid handling device. Further, the fluid can be carried away from the hose through the another hose or directly by means of the fluid handling device.

Thus, one decontamination unit can be connected to the fluid handling device or several decontamination units can be connected to each other forming a line of the decontamination units. The number of the decontamination units connected to each other can be adapted to the area of the ground with the soil to be decontaminated from harmful substances. The decontaminating units can be transported unconnected to the position of the area of the ground and then can be positioned in the ground one by one or can be connected to each other at the position of the area. Thereby, handling of the decontamination units is facilitated which also contributes to simplify the process of decontamination of the contaminated soil.

Consequently, the above mention abject is achieved.

According to one embodiment the decontamination unit comprises a primary connecting member arranged at the first end of the body and a secondary connecting member arranged at the second end of the body, wherein the primary connecting member is connectable to a secondary connecting member of another decontamination unit or to a drawing device to permit drawing of the decontamination unit. Thereby, the decontamination unit can be connected to the another decontamination unit or to the drawing device by means of the connecting members which improves the connection of the decontamination unit with the another decontamination unit or with the drawing device. Thereby risks for disconnection of the decontamination unit from the drawing device can be reduced as well as risks for disconnection of decontamination units, connected to each other, can be reduced.

According to one embodiment the decontamination unit comprises a wire extending through the body and being fastened to the primary connecting member and to the secondary connecting member. The wire, or a rope, improves the strength of the decontamination unit along the extension of the wire. As a result, risks for disconnection of the decontamination unit from the drawing device can be further reduced as well as risks for disconnection of decontamination units, connected to each other, can be further reduced. Further, pulling apart the decontamination unit can be prevented, thanks to the wire.

According to one embodiment the body is an elongated body. Thus, the positioning of the body in, for example a pipe, can be facilitated.

According to one embodiment the absorbent material comprises at least one of bone meal, peat or bark. Bone meal, peat, bark or other natural absorbing materials can effectively absorb harmful substances from the ground in an environment friendly manner. In some cases, the absorbent material may comprise synthetic material such as polypropylene. Further the absorbent material may comprise apatite absorbs cesium.

According to one embodiment the hose is centered in the absorbent material within the body. As a result, fluid supplied to the hose can be evenly distributed around the hose into the absorbent material and further into the soil. The evenly distributed fluid improves the process of decontamination of the decontaminating soil of an area of the ground.

An object of the present invention is to provide an improved decontamination set.

The object is achieved by a decontamination set comprising at least two decontamination units according to the first independent claim. The at least two decontamination units are connected to each other through the first end part or the second end part of the hose.

The decontamination set can be assembled at the position for use of the decontamination set. Thus, there is no need of transport a whole set to the position of the area of the ground be de decontaminated. Further, the length of the decontamination set, i.e. the number of decontamination units included in the decontamination set can be decided at the position of the area. Thereby, the process of decontamination of the soil is simplified. Thereby the above mentioned object is achieved.

According to an embodiment at least one of the decontamination units comprises an absorbent material which differs from the absorbent material of the remaining decontamination units. The contaminated soil can be contaminated by different substances located at different positions in the ground. Because the absorbent material differs from the absorbent material of the remaining decontamination units, the absorbent material in the decontamination units can be selected depending on the kind and the position to the contaminations to be catch up by the decontamination units. Thus, an yet improved decontamination set is provided.

A further object of the present invention is to provide an improved decontamination arrangement.

The object is achieved by a decontamination arrangement comprising a drain pipe, adapted to be horizontally positioned in the ground, and a decontamination set according to any embodiments as above. As a result, the decontamination arrangement can be assembled at the position of the contaminated soil which simplifies transport of the decontamination arrangement as well as the process of decontaminating the soil.

Thereby the above mentioned object is achieved.

A further object of the present invention is to provide an improved method for decontaminating soil.

The object is achieved by a method for decontaminating soil of an area of the ground from harmful substances, the area having a ground surface and a depth from the ground surface into the ground. The method comprises the steps of:
- positioning at least one drain pipe, in the area of the ground so that a main part of the at least one drain pipe extends in parallel with the ground surface, wherein the at least one drain pipe has an opening through the ground surface,
- inserting a decontamination set, according to any embodiments of the decontamination set as above, into the at least one drain pipe and
- introducing a fluid into the hose to permit the fluid to penetrate the absorbent material and to pass perforations of the drain pipe into the soil of the area of the ground in order to incapacitate the harmful substances.

Because the method uses an improved an improved decontamination set, an improved method for decontaminating soil of an area of the ground from harmful substances is provided. Thereby the above mentioned object is achieved.

According to one embodiment the step of inserting of the decontamination set into the drain pipe comprises drawing the decontamination set into the drain pipe. The decontamination set can be drawn into the drain pipe by hand, of a user, or by means of for example a winch.

According to one embodiment the step of introducing of the fluid into the hose comprises heating of the fluid. Thus, the fluid can be hot water, steam or other heated fluids. Heated fluid facilitates distribution of the fluid into the ground as well as improves release of harmful substances from the ground which can improve decontamination of the harmful substances.

According to one embodiment the method comprises the steps of:
- investigating the area of the ground to create a mapping of the area, with regard to at least the location of the harmful substances, before the positioning step and then
- positioning the least one drain pipe in the area based on the mapping of the area.

According to one embodiment the method comprises the further step of extracting of the fluid from the hose a predetermined time after the introducing of the fluid into the hose. After introduction of the fluid into the hose, the fluid needs to act on the ground in order to release harmful substances from the ground and to catch the substances. Thus, after the predetermined time after the introducing of the fluid into the hose, the fluid with the harmful substances can be extracted from the hose for further processing, such as cleaning.

According to one embodiment the fluid comprises at least one of a bacteria, fungi, an oxidation medium and a pH-regulating medium. Bacteria, fungi, the oxidation medium and/or the pH-regulating medium can react with harmful substances in the ground, which can improve the decontamination of the ground from harmful substances.

Further advantages as well as advantageous features of the disclosure will appear from the description following below.

### BRIEF DESCRIPTION OF THE DRAWINGS

In the following preferred embodiments of the invention are described with reference to the attached drawings, on which:
- Fig. 1a: is a cross section of a decontamination unit,
- Fig. 1b: is a cross section of a decontamination unit comprising a wire,
- Fig. 2: is a cross section of a decontamination set and
- Fig. 3: is a schematic illustration of a decontamination arrangement positioned in the ground.

### DETAILED DESCRIPTION OF PREFERRED EMBODIMENTS OF THE INVENTION

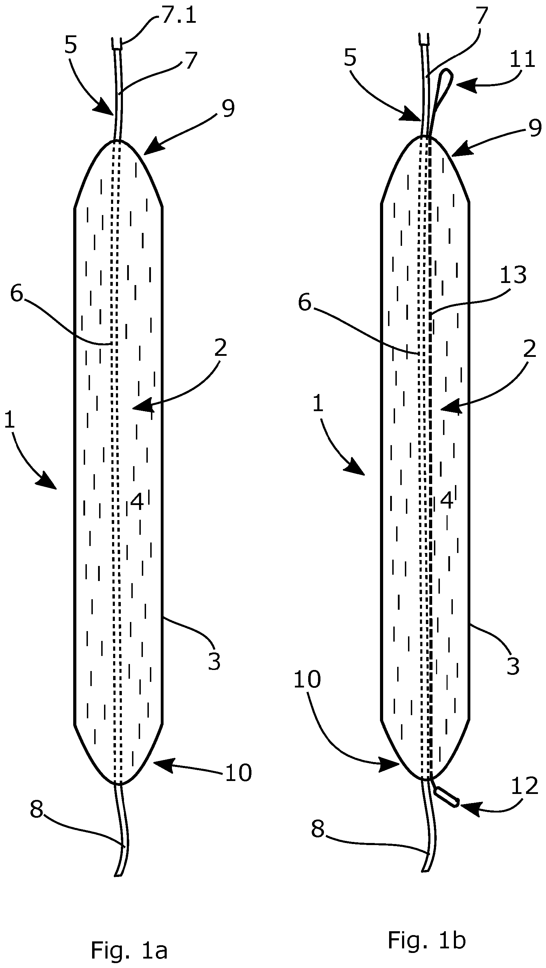

Figs. 1a and 1b show a decontamination unit 1 for decontaminating soil of an area of the ground from harmful substances. The decontamination unit 1 comprises a body 2 comprising an outer coating 3 of a fluid permeable material, for example ground cloth, and an absorbent material 4, for absorbing of the harmful substances, enclosed within the outer coating 3. According to one embodiment the absorbent material 4 comprises at least one of bone meal, peat or bark.

Further, the decontamination unit 1 comprises a hose 5 having an intermediate perforated part 6 arranged in the absorbent material 4 inside the body 2, and a first end part 7 and a second end part 8 protruding from a respective first end 9 and second end 10 of the body 2. The first end part 7 and the second end part 8 are connectable to another decontamination unit or to a fluid handling device, such as a pump, to permit fluid communication to and from the hose 5.

According to one embodiment the first end part 7 is adapted to receive the second end part 8 of another decontamination unit. For instance, the second end part 8 can be tightly inserted into the first end part 7 to permit fluid communication to and from the hose 5. As illustrated in Fig. 1a and Fig. 1b the first end part 7 has an outer portion 7.1 having diameter that is larger than the diameter of the remaining portion of the first end part 7. Thereby, the second end part 8 can be inserted into the outer portion 7.1 forming a tight connection between the first end part 7 and the second end part 8.

The diameter of the outer portion 7.1 can be adapted such that the connection between the first end part 7 and the second end part 8 enables drawing of the decontamination units 1 connected to each other only through the first part 7 and the second part 8 of the hoses 5. This means that the connection between the outer portion 7.1 and the second part 8 is tight such that friction forces between the outer portion 7.1 and the second part 8 can withstand resistance forces caused mostly due to the weight of the decontamination units 1 during drawing of the decontamination units without separation of the decontaminating units 1.

According to one embodiment the first end part 7 and the second end part 8 are connected to each other by means of a coupling member (not shown) arranged to connect the first end part 7 and the second end part 8 by, for example, tight insertion of the first end part 7 and the second end part 8 into the unit. The coupling member can be arranged in a similar way to a water hose connection available on the market.

As illustrated in Fig. 1b, the decontamination unit 1 comprises a primary connecting member 11 arranged at the first end 9 of the body 2 and a secondary connecting member 12 arranged at the second end 10 of the body 2, wherein the primary connecting member 11 is connectable to a secondary connecting member 12 of another decontamination unit 1 or to a drawing device, such as a winch, to permit drawing of the decontamination unit 1. According to one embodiment the primary connecting member 11 is a loop of a steel wire and the secondary connecting member 12 comprises a carabiner. The loop and the carabiner can be attached to the first end 9 of the body 2 and to the second end 10 of the body 2 respectively by being fastened to the outer coating 3.

As illustrated in Fig. 1b, the decontamination unit 1 can comprise a wire 13 extending through the body 2 and being fastened to the primary connecting member 11 and to the secondary connecting member 12. According to one embodiment the primary connecting member 11, such as a loop, is formed by the wire 13. The secondary connecting member 12, such as a carabiner, can be fastened to the wire 13 by means of a further loop of the wire 13, wherein a part of the carabiner is arranged inside the further loop of the wire 13.

According to the embodiments illustrated in Fig. 1a and Fig. 1b the body 2 is an elongated body 2.

The hose 5 can be centered in the absorbent material 4 within the body 2.

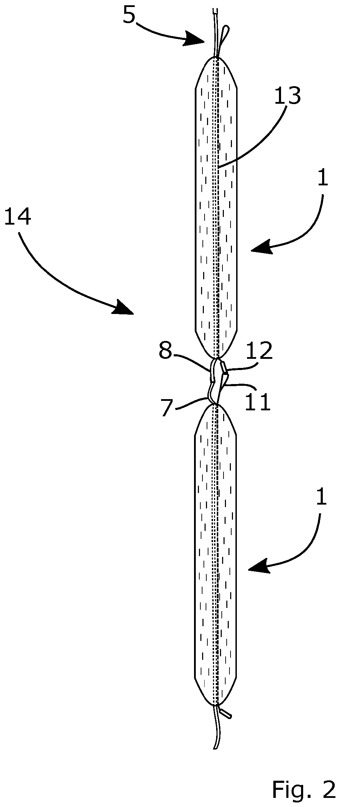

Fig. 2 shows a decontamination set 14 according to the invention. The decontamination set 14 in Fig. 2 comprises two decontamination units 1 illustrated in Fig. 1b. Thus, the Fig. 2 shows a decontamination set 14 comprising two decontamination units 1 with a wire 13. However, the decontamination set 14 may comprise at least two decontamination units 1 illustrated in Fig. 1a. Because the decontamination unit 1 in Fig. 1a does not comprise a wire, the decontamination units 1 would be connected by means of the hose 5 to build a decontamination set 14. More than two decontamination units 1 can be included in a decontamination set 14.

As illustrated in Fig. 2 the decontamination units 1 have been connected to each other through a first end part 7 and a second end part 8 of respective hose 5 of respective decontamination unit 1 and by the primary connecting member 11 and the secondary connecting member 12 of respective decontamination unit 1. However, according to one embodiment the at least two decontamination units 1 are connected to each other through only the first end part 7 and the second end part 8 of the hose 5.

According to one embodiment at least one of the decontamination units 1 comprises an absorbent material which differs from the absorbent material of the remaining decontamination units 1.

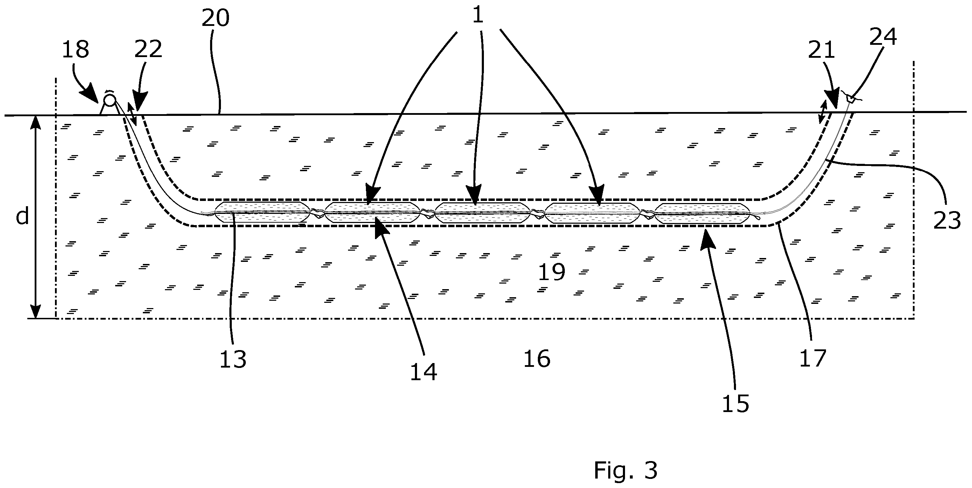

Fig. 3 is a schematic illustration of a decontamination arrangement 15 according to the invention, wherein the decontamination arrangement 15 is positioned in the ground 16. According to the embodiment illustrated in Fig. 3, the decontamination arrangement 15 comprises a drain pipe 17, adapted to be horizontally positioned in the ground 16, and a decontamination set 14 comprising several decontamination units 1 connected to each other. The decontamination set 14 can comprise a different number of decontamination units 1, for example one decontamination unit 1 according to Fig. 1b, i.e. with a wire. According to one embodiment the decontamination set 14 comprising a number of connected decontamination units 1, according to Fig 1a, i.e. without a wire, can be positioned in the drain pipe 17.

An area 19 of the ground 16 can be decontaminated using a method for decontaminating soil of the area 19 of the ground 16 from harmful substances.

The area 19 has a ground surface 20 and a depth d from the ground surface 20 into the ground 16. Thus, with area 19 is meant a volume of the ground 16. The method comprises the steps of:
- positioning at least one drain pipe 17, in the area 19 of the ground 16 so that a main part of the at least one drain pipe 17 extends in parallel with the ground surface 20, wherein the at least one drain pipe 17 has an opening 21 through the ground surface 20,
- inserting a decontamination unit 1 or a decontamination set 14, described in conjunction to Fig. 2, into the at least one drain pipe 17 and
- introducing a fluid into the hose 5 to permit the fluid to penetrate the absorbent material and to pass perforations of the drain pipe into the soil of the area 19 of the ground in order to incapacitate said harmful substances.

As illustrated in Fig. 3, the drain pipe 17 has been positioned in the area 19 of the ground 16 such that the opening 21 extends through the ground surface 20. Thus, the decontamination set 14 with decontamination units 1 can be simply inserted into the drain pipe 17 from the surface 20 of the ground 16 through the opening 21, which may also be called an insertion opening 21. On the opposite side of the drain pipe 17 to the insertion opening 21, there is another opening 22 of the drain pipe 17 extending through the surface 20. The another opening 22 may be called an extraction opening 22 for drawing of the decontamination set 14 in order to position of the decontamination set 14 in an operation position within the drain pipe 17. A winch 18 can be arranged at the extraction opening 22 for drawing of the decontamination set 14 through the drain pipe 17.

According to one embodiment, the hose 5 of the decontamination unit 1b is connected to an extension hose 23 connected to a fluid handling device 24, such as a pump. Thus, a fluid can be delivered to the hose 5 and further to the area 19 of the ground 16.

Several drain pipes 17 can be positioned in the area 19 substantially parallel to each other. The several drain pipes 17 can be positioned on different depths of the area 19, i.e. at different distances from the surface 20. Further, the several drain pipes 17 can be positioned parallel to each other and to the surface 20 and being positioned along an extension of the surface 20.

According to one embodiment the step of inserting of the decontamination unit 1 or of the decontamination set 14 into the drain pipe 17 comprises drawing the decontamination unit 1 or the decontamination set into the drain pipe 17. The drawing can be done by hand of a user or by means of a winch 18.

According to one embodiment the step of introducing of the fluid into the hose 5 comprises heating of the fluid. Thus, the fluid can be hot water, steam or other heated fluids. Heated fluid facilitates distribution of the fluid into the ground 16 as well as improves release of harmful substances from the ground 16 which can improve decontamination of the harmful substances.

Further, the method may comprise the steps of:
- investigating the area 19 of the ground 16 to create a mapping of the area 19, with regard to at least the location of the harmful substances, before the positioning step and then
- positioning the least one drain pipe 17 in the area 19 of the ground 16 based on the mapping of the area 19.

The mapping may be a 3-D pattern of the area 19, which pattern may be illustrated for a user on a screen.

According to one embodiment the method comprises the further step of extracting of the fluid from the hose 5 a predetermined time after the introducing of the fluid into the hose 5.

The fluid comprises at least one of a bacteria, fungi, an oxidation medium and a pH-regulating medium. Bacteria, fungi, the oxidation medium and/or the pH-regulating medium can react with harmful substances in the ground, which can improve decontamination of the ground from harmful substances.

The bacteria may comprise at least one of Alcanivorax borkumensis, Oleispera, Thalassolitiuus oleivorans, Colwellia and Brachybacterium strain.

The fungi may comprise at least one of Aspergillus niger, Irpex lacteus, Pleurotus ostreatus, White-rot fungi and Ectomycorrhizal fungi.

The pH-regulating medium may be an acid or a base.

It will be understood that the foregoing is illustrative of various embodiments and that the invention is defined only by the appended claims.

## Claims

1. A decontamination set (14) comprising at least two decontamination units (1), wherein each of the at least two decontamination units (1) is arranged for decontaminating soil of an area (19) of the ground (16) from harmful substances, wherein each of the at least two decontamination units (1) comprises:
- a body (2) comprising an outer coating (3) of a fluid permeable material and an absorbent material (4), for absorbing of said harmful substances, enclosed within said outer coating (3),
- a hose (5) having an intermediate perforated part (6) arranged in the absorbent material (4) inside the body (2), and a first end part (7) and a second end part (8) protruding from a respective first end (9) and second end (10) of the body (2), wherein the first end part (9) and the second end part (10) are connectable to another decontamination unit or to a fluid handling device to permit fluid communication to and from said hose (5),
- a primary connecting member (11) arranged at the first end (9) of the body (2) and a secondary connecting member (12) arranged at the second end (10) of the body (2), wherein the primary connecting member (11) is connectable to a secondary connecting member (12) of another decontamination unit or to a drawing device to permit drawing of the decontamination unit (1) and
- a wire (13) extending through the body (2) and being fastened to the primary connecting member (11) and to the secondary connecting member (12),
- wherein the at least two decontamination units (1) are connected to each other through the first end part (7) or the second end part (8) of the hose (5) and by the primary connecting member (11) and the secondary connecting member (12)

2. The decontamination set (14) according to claim 1, wherein said body (2) is an elongated body.

3. The decontamination set (14) according to claim 1 or 2 wherein said absorbent material (4) comprises at least one of bone meal, peat or bark.

4. The decontamination set (14) according to any of claims 1 to 3, wherein the hose (5) is centered in the absorbent material within the body (2).

5. The decontamination set (14) according to any of claims 1 to 4, wherein at least one of the decontamination units (1) comprises an absorbent material which differs from the absorbent material of the remaining decontamination units.

6. A decontamination arrangement (15) comprising a drain pipe (17), adapted to be horizontally positioned in the ground (16), and a decontamination set (14) according to any of claims 1 to 5 positioned in the drain pipe (17).

7. A method for decontaminating soil of an area (19) of the ground (16) from harmful substances, the area (19) having a ground surface (20) and a depth (d) from the ground surface into the ground (16), the method comprises the steps of:
- positioning at least one drain pipe (17), in the area (19) of the ground (16) so that a main part of the at least one drain pipe (17) extends in parallel with the ground surface (20), wherein the at least one drain pipe (17) has an opening through the ground surface (20),
- inserting a decontamination set (14) according to any of claims 1 to 5 into the at least one drain pipe (17) and
- introducing a fluid into the hose (5) to permit the fluid to penetrate the absorbent material and to pass perforations of the drain pipe () into the soil of the area (19) of the ground (16) in order to incapacitate said harmful substances.

8. The method according to claim 7, wherein the step of inserting of the decontamination set (14) into the drain pipe (17) comprises drawing the decontamination unit (1) or the decontamination set (14) into the drain pipe (17).

9. The method according to claim 7 or 8, wherein the step of introducing of the fluid into the hose (5) comprises heating of the fluid.

10. The method according to any of claims 7 to 9, comprising the steps of:
- investigating the area (19) of the ground (16) to create a mapping of the area (19), with regard to at least the location of the harmful substances, before the positioning step and then
- positioning the least one drain pipe (17) in the area (19) based on the mapping of said area (19).

11. The method according to any of claims 7 to 10, comprising the further step of extracting of the fluid from the hose (5) a predetermined time after the introducing of the fluid into the hose (5).

12. The method according to any of claims 7 to 11, wherein said fluid comprises at least one of a bacteria, fungi, an oxidation medium and a pH-regulating medium.

## Patentansprüche

1. Dekontaminationssatz (14), der mindestens zwei Dekontaminationseinheiten (1) umfasst, wobei jede der mindestens zwei Dekontaminationseinheiten (1) zur Dekontamination von Böden eines Bereichs (19) des Grunds (16) zur Entfernung von Schadstoffen eingerichtet ist, wobei jede der mindestens zwei Dekontaminationseinheiten (1) Folgendes umfasst:
- einen Körper (2), der eine Außenbeschichtung (3) aus einem fluiddurchlässigen Material und ein in der Außenbeschichtung (3) eingeschlossenes absorbierendes Material (4) zur Absorption der Schadstoffe umfasst,
- einen Schlauch (5), der ein perforiertes Zwischenstück (6), das in dem absorbierenden Material (4) im Inneren des Körpers (2) angeordnet ist, und ein erstes Endstück (7) und ein zweites Endstück (8), die von einem jeweiligen ersten Ende (9) und zweiten Ende (10) des Körpers (2) vorstehen, aufweist, wobei das erste Endstück (9) und das zweite Endstück (10) mit einer anderen Dekontaminationseinheit oder mit einer Fluidhandhabungsvorrichtung verbindbar sind, um eine Fluidverbindung zu und von dem Schlauch (5) zu ermöglichen,
- ein primäres Verbindungselement (11), das an dem ersten Ende (9) des Körpers (2) angeordnet ist, und ein sekundäres Verbindungselement (12), das an dem zweiten Ende (10) des Körpers (2) angeordnet ist, wobei das primäre Verbindungselement (11) mit einem sekundären Verbindungselement (12) einer anderen Dekontaminationseinheit oder mit einer Ziehvorrichtung verbindbar ist, um ein Ziehen der Dekontaminationseinheit (1) zu ermöglichen, und
- ein Drahtseil (13), das sich durch den Körper (2) erstreckt und an dem primären Verbindungselement (11) und an dem sekundären Verbindungselement (12) befestigt ist,
- wobei die mindestens zwei Dekontaminationseinheiten (1) durch das erste Endstück (7) oder das zweite Endstück (8) des Schlauchs (5) und mittels des primären Verbindungselements (11) und des sekundären Verbindungselements (12) miteinander verbunden sind.

2. Dekontaminationssatz (14) nach Anspruch 1, wobei der Körper (2) ein länglicher Körper ist.

3. Dekontaminationssatz (14) nach Anspruch 1 oder 2, wobei das absorbierende Material (4) mindestens eines von Knochenmehl, Torf oder Rinde umfasst.

4. Dekontaminationssatz (14) nach einem beliebigen der Ansprüche 1 bis 3, wobei der Schlauch (5) in dem absorbierenden Material innerhalb des Körpers (2) zentriert ist.

5. Dekontaminationssatz (14) nach einem beliebigen der Ansprüche 1 bis 4, wobei mindestens eine der Dekontaminationseinheiten (1) ein absorbierendes Material umfasst, das sich von dem absorbierenden Material der restlichen Dekontaminationseinheiten unterscheidet.

6. Dekontaminationsanordnung (15), die ein Entwässerungsrohr (17), das dafür ausgelegt ist, horizontal im Grund (16) platziert zu werden, und einen in dem Entwässerungsrohr (17) platzierten Dekontaminationssatz (14) nach einem beliebigen der Ansprüche 1 bis 5 umfasst.

7. Verfahren zur Dekontamination von Böden eines Bereichs (19) des Grunds (16) zur Entfernung von Schadstoffen, wobei der Bereich (19) eine Grundoberfläche (20) und eine Tiefe (d) von der Grundoberfläche in den Grund (16) hinein umfasst, wobei das Verfahren die folgenden Schritte umfasst:
- Platzieren mindestens eines Entwässerungsrohrs (17) so in dem Bereich (19) des Grunds (16), dass sich ein Hauptstück des mindestens einen Entwässerungsrohrs (17) parallel zu der Grundoberfläche (20) erstreckt, wobei das mindestens eine Entwässerungsrohr (17) eine Öffnung durch die Grundoberfläche (20) hindurch aufweist,
- Einführen eines Dekontaminationssatzes (14) nach einem beliebigen der Ansprüche 1 bis 5 in das mindestens eine Entwässerungsrohr (17), und
- Einbringen eines Fluids in den Schlauch (5), um dem Fluid zu ermöglichen, in das absorbierende Material einzudringen und durch Perforationen des Entwässerungsrohrs (17) in den Boden des Bereichs (19) des Grunds (16) einzudringen, um die Schadstoffe unschädlich zu machen.

8. Verfahren nach Anspruch 7, wobei der Schritt des Einführens des Dekontaminationssatzes (14) in das Entwässerungsrohr (17) ein Ziehen der Dekontaminationseinheit (1) oder des Dekontaminationssatzes (14) in das Entwässerungsrohr (17) umfasst.

9. Verfahren nach Anspruch 7 oder 8, wobei der Schritt des Einbringens des Fluids in den Schlauch (5) ein Erwärmen des Fluids umfasst.

10. Verfahren nach einem beliebigen der Ansprüche 7 bis 9, das die folgenden Schritte umfasst:
- Untersuchen des Bereichs (19) des Grunds (16) vor dem Platzierungsschritt, um eine Abbildung des Bereichs (19) in Bezug auf zumindest die Lage der Schadstoffe zu erzeugen, und anschließend
- Positionieren des mindestens einen Entwässerungsrohrs (17) in dem Bereich (19) basierend auf der Abbildung des Bereichs (19).

11. Verfahren nach einem beliebigen der Ansprüche 7 bis 10, das ferner den weiteren Schritt des Extrahierens des Fluids aus dem Schlauch (5) eine vorbestimmte Zeit nach dem Einbringen des Fluids in den Schlauch (5) umfasst.

12. Verfahren nach einem beliebigen der Ansprüche 7 bis 11, wobei das Fluid mindestens eines von einem Bakterium, Pilzen, einem Oxidationsmittel und einem pH-regulierenden Mittel umfasst.

## Revendications

1. Ensemble de décontamination (14) comprenant au moins deux unités de décontamination (1), dans lequel chacune des au moins deux unités de décontamination (1) est agencée pour décontaminer le sol d'une zone (19) du sol (16) de substances nocives, dans lequel chacune des au moins deux unités de décontamination (1) comprend :
- un corps (2) comprenant un revêtement externe (3) d'un matériau perméable aux fluides et un matériau absorbant (4), pour absorber lesdites substances nocives, enfermé dans ledit revêtement externe (3),
- un tuyau (5) ayant une partie perforée intermédiaire (6) agencée dans le matériau absorbant (4) à l'intérieur du corps (2), et une première partie d'extrémité (7) et une deuxième partie d'extrémité (8) faisant saillie à partir d'une première extrémité respective (9) et d'une deuxième extrémité respective (10) du corps (2), dans lequel la première partie d'extrémité (9) et la deuxième partie d'extrémité (10) peuvent être connectées à une autre unité de décontamination ou à un dispositif de manipulation de fluide pour permettre une communication de fluide vers et à partir dudit tuyau (5),
- un élément de connexion primaire (11) agencé à la première extrémité (9) du corps (2) et un élément de connexion secondaire (12) agencé à la deuxième extrémité (10) du corps (2), dans lequel l'élément de connexion primaire (11) peut être connecté à un élément de connexion secondaire (12) d'une autre unité de décontamination ou à un dispositif d'étirage pour permettre l'étirage de l'unité de décontamination (1) et
- un fil (13) s'étendant à travers le corps (2) et étant fixé à l'élément de connexion primaire (11) et à l'élément de connexion secondaire (12),
- dans lequel les au moins deux unités de décontamination (1) sont connectées l'une à l'autre par l'intermédiaire de la première partie d'extrémité (7) ou de la deuxième partie d'extrémité (8) du tuyau (5) et par l'élément de connexion primaire (11) et l'élément de connexion secondaire (12)

2. Ensemble de décontamination (14) selon la revendication 1, dans lequel ledit corps (2) est un corps allongé.

3. Ensemble de décontamination (14) selon la revendication 1 ou 2, dans lequel ledit matériau absorbant (4) comprend l'au moins un parmi la farine d'os, la tourbe ou l'écorce.

4. Ensemble de décontamination (14) selon l'une quelconque des revendications 1 à 3, dans lequel le tuyau (5) est centré dans le matériau absorbant à l'intérieur du corps (2).

5. Ensemble de décontamination (14) selon l'une quelconque des revendications 1 à 4, dans lequel l'au moins une des unités de décontamination (1) comprend un matériau absorbant qui diffère du matériau absorbant des unités de décontamination restantes.

6. Dispositif de décontamination (15) comprenant un tuyau de drainage (17), adapté pour être positionné horizontalement dans le sol (16), et un ensemble de décontamination (14) selon l'une quelconque des revendications 1 à 5, positionné dans le tuyau de drainage (17).

7. Procédé pour décontaminer le sol d'une zone (19) du sol (16) de substances nocives, la zone (19) ayant une surface de sol (20) et une profondeur (d) de la surface de sol dans le sol (16), le procédé comprenant les étapes consistant à :
- le positionnement de l'au moins un tuyau de drainage (17), dans la zone (19) du sol (16) de sorte qu'une partie principale dudit au moins un tuyau de drainage (17) s'étend parallèlement à la surface du sol (20), ledit au moins un tuyau de drainage (17) présentant une ouverture à travers la surface du sol (20),
- l'insertion d'un ensemble de décontamination (14) selon l'une quelconque des revendications 1 à 5 dans l'au moins un tuyau de drainage (17) et
- l'introduction d'un fluide dans le tuyau (5) pour permettre au fluide de pénétrer dans le matériau absorbant et de faire passer des perforations du tuyau de drainage () dans le sol de la zone (19) du sol (16) afin d'incapaciter lesdites substances nocives.

8. Procédé selon la revendication 7, dans lequel l'étape d'insertion de l'ensemble de décontamination (14) dans le tuyau de drainage (17) comprend l'aspiration de l'unité de décontamination (1) ou de l'ensemble de décontamination (14) dans le tuyau de drainage (17).

9. Procédé selon la revendication 7 ou 8, dans lequel l'étape d'introduction du fluide dans le tuyau (5) comprend le chauffage du fluide.

10. Procédé selon l'une quelconque des revendications 7 à 9, comprenant les étapes de :
- L'étude de la zone (19) du sol (16) permet d'établir une cartographie de la zone (19), en ce qui concerne au moins l'emplacement des substances nocives, avant l'étape de positionnement, puis
- le positionnement de l'au moins un tuyau de drainage (17) dans la zone (19) sur la base de la cartographie de ladite zone (19).

11. Procédé selon l'une quelconque des revendications 7 à 10, comprenant l'étape supplémentaire consistant à extraire le fluide du tuyau (5) un temps prédéterminé après l'introduction du fluide dans le tuyau (5).

12. Procédé selon l'une quelconque des revendications 7 à 11, dans lequel ledit fluide comprend au moins l'un d'une bactérie, d'un champignon, d'un milieu d'oxydation et d'un milieu de régulation du pH.
